# EUROPÄISCHE PATENTSCHRIFT

(11) **EP 1 200 933 B1**
(45) Veröffentlichungstag und Bekanntmachung des Hinweises auf die Patenterteilung: **02.05.2003**
(21) Anmeldenummer: 00954368.7
(22) Anmeldetag: 26.07.2000
(51) Int. Cl.: G06T 1/00

(54) **VERFAHREN ZUR AUTOMATISCHEN ANPASSUNG DER VON EINER DATENBEREITSTELLENDEN EINRICHTUNG ZU EINER DATENABRUFENDEN EINRICHTUNG ZU ÜBERTRAGENDEN DATEN AN DIE FÄHIGKEITEN DIESES ENDGERÄTES**
METHOD FOR AUTOMATICALLY ADAPTING DATA TO BE TRANSMITTED FROM A DATA TRANSMITTING DEVICE TO A DATA REQUESTING DEVICE TO THE CAPABILITIES OF THE DATA REQUESTING DEVICE
PROCEDE D'ADAPTATION AUTOMATIQUE DES DONNEES A TRANSMETTRE D'UN APPAREIL FOURNISSEUR DE DONNEES A UN APPAREIL DEMANDANT LES DONNEES AUX CAPACITES DE L'APPAREIL DEMANDANT LES DONNEES

(30) Priorität: 27.07.1999 DE 19934787
(43) Veröffentlichungstag der Anmeldung: 02.05.2002
(73) Patentinhaber: T-Mobile Deutschland GmbH, 53227 Bonn (DE)
(72) Erfinder: HILLEBRAND, Rainer, D-48268 Greven (DE)
(74) Vertreter: Riebling, Peter, Dr.-Ing.
(86) Internationale Anmeldenummer: DE0002454
(87) Internationale Veröffentlichungsnummer: WO01008097

(56) Entgegenhaltungen:
- WO-A-98/37698
- WO-A-98/43177
- CHUNG-SHENG LI ET AL: "Multimedia content description in the InfoPyramid" PROCEEDINGS OF THE 1998 IEEE INTERNATIONAL CONFERENCE ON ACOUSTICS, SPEECH AND SIGNAL PROCESSING, ICASSP '98 (CAT. NO.98CH36181), PROCEEDINGS OF THE 1998 IEEE INTERNATIONAL CONFERENCE ON ACOUSTICS, SPEECH AND SIGNAL PROCESSING, SEATTLE, WA, USA, 12-1, Seiten 3789-3792 vol.6, XP002141758 1998, New York, NY, USA, IEEE, USA ISBN: 0-7803-4428-6

## Beschreibung

Die Erfindung betrifft ein Verfahren zur automatischen Anpassung der von einer datenbereitstellenden Einrichtung zu einer datenabrufenden Einrichtung zu übertragenden Daten an die Fähigkeiten dieses Endgerätes.

In den heutigen Datenkommunikationsnetzen existieren Endgeräte mit unterschiedlichen Anzeigen, Eingabegeräten und Rechnerleistungen. Anzeigen unterscheiden sich vor allem in der Farbtiefe, Auflösung und Größe. Eingabegeräte können z.B. Tastaturen oder berührungsempfindliche Flächen sein.
Werden Daten von einer datenbereitstellenden Einrichtung zu einem Endgerät übertragen , ist es für eine möglichst kurze Übertragungsdauer der Daten wichtig, daß das zu übertragende Datenvolumen bei gegebener Bandbreite möglichst klein ist. Da jedoch der sendenden Einrichtung nicht bekannt ist, welche Eigenschaften das Endgerät besitzt, werden die Daten und somit das Datenvolumen nicht an die Eigenschaften des Endgeräts angepaßt. Einem Endgerät mit einer Anzeige mit einer geringen Auflösung und Schwarz-Weiß-Darstellung werden z.B. die gleichen Daten zugesandt wie einem Endgerät mit hoher Auflösung und einer Vielzahl von darstellbaren Farben.

Dies führt dazu, daß Daten übertragen werden, die in den Endgeräten aufgrund deren Fähigkeiten nicht verarbeitet werden können. Ressourcen der Übertragungsmedien, der sendenden Einrichtungen und empfangenden Endgeräte werden verschwendet.

In der WO-A-98 37698 ist ein anpassbares Datenübertragungssystem offenbart, wobei ein datenbereitstellender Server vorgesehen ist, der entweder durch Software oder geeignete Hardware einen Algorithmus zur Erzeugung und Speicherung einer Mehrzahl hierarchisch gegliederter Videodatenströme durchführt, wobei erfasst wird, welche Multimedia-Charakteristika eine datenabrufende Einrichtung aufweist und basierend auf dieser Information eine spezielle Auswahl der verfügbaren Videodatenströme an die datenabrufende Einrichtung übermittelt wird.

Die WO-A-98 43177 lehrt ein System zur dynamischen Umcodierung von zwischen Computern übertragenden Daten. Es ist ein sogenannter Proxy-Server vorgesehen, der Einrichtungen zur dynamischen Anpassung von von einem Netzwerkserver an einen Netzwerkclient übermittelten Daten umfasst, wobei die Anpassung in Abhängigkeit eines vom Netzwerkclient gelieferten Selektionskriterium erfolgt. Das Selektionskriterium kann z.B. die Hardwarekonfiguration des Netzwerkclients sein.

Die Aufgabe der vorliegende Erfindung besteht daher darin, ein Verfahren zur automatischen Anpassung der von einer datenbereitstellenden Einrichtung zu einer datenabrufenden Einrichtung zu übertragenden Daten an die Fähigkeiten der datenabrufenden Einrichtung anzugeben, welches sehr flexibel auf die Fähigkeiten der datenabrufenden Einrichtung reagieren kann..

Die Lösung der Aufgabe wird durch die in Anspruch 1 angegebenen Merkmale erreicht.

Erfindungsgemäß wird bei der Datenübertragung eine Reduktion der Ressourcenverschwendung dadurch möglich, daß die datenbereitstellende Einrichtung Informationen über die Fähigkeiten des empfangenden Endgeräts erhält, um die zu übertragenden Daten entsprechend den vorgegebenen Fähigkeiten an die datenempfangende Einrichtung zu übermitteln.

Der Vorteil dieses Verfahrens für den Betreiber der datenbereitstellenden Einrichtung liegt unter anderem in der niedrigeren benötigten Rechenleistung der sendenden Einrichtung und somit geringeren Anschaffungs- und Wartungskosten. Je nach Übertragungstechnik werden die Übertragungskosten des Betreibers reduziert.

Die Vorteile dieses Verfahrens für den Nutzer der datenabrufenden Einrichtung liegen unter anderem in der kürzeren Datenübertragungsdauer und den geringeren Übertragungskosten. Da nach diesem Verfahren die sendende Einrichtung die Daten auch an die Anzeige der empfangenden Einrichtung anpassen kann, kann der Nutzer auch eine an die Anzeige angepaßte Darstellung der Daten erhalten. Z.B. textuale Informationen, die sonst in Grafiken enthalten sind, können bei Endgeräten mit reiner Textdarstellung von der sendenden Einrichtung als Text zum Endgerät gesendet und dort zur Anzeige gebracht werden.

Nachfolgend wird die Erfindung anhand eines Ausführungsbeispiels unter Bezugnahme auf eine Zeichnungsfigur näher beschrieben. Aus der Zeichnung und ihrer Beschreibung ergeben sich weitere Merkmale und Vorteile der Erfindung.

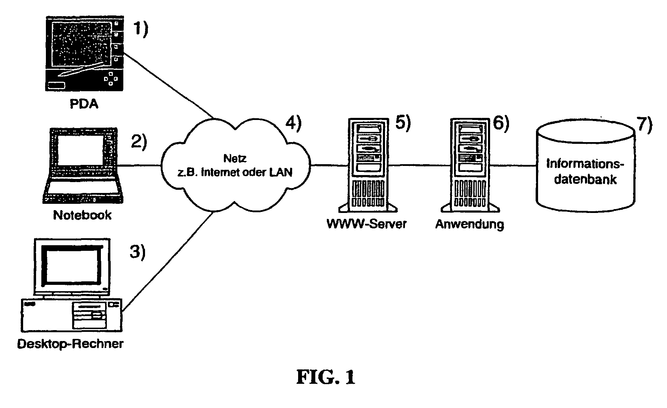

In Figur 1 ist ein Szenario beschrieben, bei dem dieses Verfahren zur automatischen Anpassung der von einer datenbereitstellenden Einrichtung zu einer datenabrufenden Einrichtung zu übertragenden Daten an die Fähigkeiten dieses Endgerätes zur Anwendung kommt.

Ein Nutzer ruft mittels drei verschiedener Endgeräte 1, 2 und 3 Informationen von einem WWW-Server 5 ab. In jedem Endgerät ist dazu ein WWW-Browser installiert.

Das Endgerät 1, in diesem Fall die datenempfangende Einrichtung, ist ein Personal Digital Assistant (PDA). Die Anzeige des PDA hat eine Auflösung von 160 x 160 Pixeln in Schwarz-Weiß-Darstellung mit reiner Textdarstellungsmöglichkeit.
Das Endgerät 2 ist ein Notebook mit einer Anzeige mit der Auflösung von 640 x 480 Pixeln, die 256 Farben und Grafiken darstellen kann.
Die Anzeige des Desktop-Rechners 3 hat eine Auflösung von 1600 x 1200 Pixeln, die etwa 16 Mio. Farben und Grafiken darstellen kann.

### Beispiel 1:

Der Nutzer gibt über eine Nutzerschnittstelle, wie z.B. einer Tastatur, die Adresse http://www.info.com/ des WWW-Servers 5 (datenbereitstellende Einrichtung) in den WWW-Browser des Endgeräts 1 ein, und fordert den WWW-Browser auf, die zu dieser Adresse gehörenden Informationen vom Server 5 abzufragen. Der WWW-Browser stellt eine Verbindung zum WWW-Server 5 her und teilt dem WWW-Server mit, zu welcher Adresse Informationen angefordert werden.

Erfindungsgemäß werden dem WWW-Server 5 ferner Informationen übermittelt, welche Fähigkeiten das Endgerät 1 besitzt. Zu diesen Fähigkeiten zählen u.a. die Auflösung der Anzeige und die Anzahl der darstellbaren Farben. Im vorliegenden Fall wird das Endgerät 1 den Server 5 anweisen, daß er die Informationen mit einer Auflösung von 160 x 160 Pixeln in Schwarz-Weiß-Darstellung in reiner Textdarstellung übermitteln soll. Die Standard-Auflösungen und Farbtiefen können dazu entsprechend codiert werden, z.B. mit 2-stelligen Nummern, so daß z.B. nur ein Byte für die Übertragung der Information genügt.

Der WWW-Server 5 teilt die Adresse und Fähigkeiten der Anwendung 6 mit. Die Anwendung 6 ruft aus der Informationsdatenbank 7 die zur Adresse http://www.info.com/gehörenden Informationen ab und formatiert diese entsprechend der Fähigkeiten des Endgerätes 1. Da das Endgerät 1 nur Text darstellen kann, erzeugt die Anwendung nur textuale Informationen in Schwarz-Weiß-Darstellung. Grafiken werden nicht erzeugt bzw. nicht aus der Informationsdatenbank gelesen. Die Anwendung 6 liefert die Daten an den Server 5, der diese zum WWW-Browser in 1 sendet. Der WWW-Browser interpretiert die Formatierungen und stellt die Informationen in der Anzeige des Endgeräts 1 dar.

### Beispiel 2:

Der Nutzer setzt im Gegensatz zum Beispiel 1 ein Notebook 2 ein. Wie in Beispiel 1 beschrieben, erhält der WWW-Server 5 die Informationen über die Fähigkeiten des Endgeräts 2 und gibt diese an die Anwendung 6 weiter. Da das Endgerät Grafiken mit maximal 256 Farben darstellen kann, erzeugt bzw. fordert die Anwendung 6 aus der Informationsdatenbank 7 Grafiken mit einer maximalen Farbtiefe von 256 Farben an, die möglichst nicht größer sind als 640 x 480 Pixel. Für die Kolorierung von Textinformationen werden nur Farben aus einer bestimmten Farbpalette mit 256 zur Auswahl stehenden Farben gewählt. Die Anwendung 6 liefert die Daten an den Server 5, der diese zum WWW-Browser im Endgerät 2 sendet. Der WWW-Browser interpretiert die Formatierungen und stellt die Informationen in der Anzeige des Notebooks 2 dar. Im Vergleich zum Beispiel 1 muß wegen der Farbinformationen und der Grafiken ein größeres Datenvolumen zwischen WWW-Server und Endgerät übertragen werden. Jedoch wird die Größe und Farbtiefe (256 Farben) der Anzeige ausgenutzt.

### Beispiel 3:

Der Nutzer setzt im Gegensatz zu den Beispielen 1 und 2 einen Desktop-Rechner 3 ein. Da wie in Beispielen 1 und 3 der Anwendung 6 die Fähigkeiten des Endgerätes 3 bekannt sind, erzeugt bzw. fordert die Anwendung 6 aus der Informationsdatenbank 7) Grafiken mit einer maximalen Farbtiefe von 16 Mio. Farben an, die möglichst nicht größer sind als 1600 x 1200 Pixel. Für die Kolorierung von Textinformationen werden Farben aus einer Farbpalette mit 16 Mio. zur Auswahl stehenden Farben, gewählt. Die Anwendung 6 liefert die Daten an den Server 5, der diese zum WWW-Browser im Endgerät 3 sendet. Der WWW-Browser interpretiert die Formatierungen und stellt die Informationen in der Anzeige des Desktop-Rechners 3 dar. Im Vergleich zu den Beispielen 1 und 2 muß wegen der Farbinformationen und der Grafiken ein größeres Datenvolumen zwischen WWW-Server und Endgerät übertragen werden. Jedoch wird die Größe und Farbtiefe (16 Mio. Farben) der Anzeige ausgenutzt.

Selbstverständlich umfasst die Erfindung auch Endgeräte, die mehrere verschiedene Anzeigeformate verarbeiten können. In diesem Fall kann z.B. eine Liste von verwendbaren Anzeigeformaten an die datenbereitstellende Einrichtung übermittelt werden. Diese wählt dann, je nach Verfügbarkeit, das geeignetste Anzeigeformat aus.

Ferner ist die Erfindung nicht auf eine Anwendung im Internet beschränkt, sondern ist für jede Art von Datentransfer in beliebigen Datennetzen verwendbar, so z.B. auch bei der Datenübertragung zwischen Teilnehmern eines digitalen Mobilfunknetzes.

## Patentansprüche

1. Verfahren zur automatischen Anpassung der von einer datenbereitstellenden Einrichtung (5) zu einer datenabrufenden Einrichtung (1; 2; 3) zu übertragenden Daten an die Fähigkeiten dieser Einrichtung, wobei die datenbereitstellende Einrichtung (5) Informationen über die Fähigkeiten der datenabrufenden Einrichtung erhält, und die Informationen Angaben zu dem von der Anzeige der datenabrufenden Einrichtung verarbeitbaren Anzeigeformat, wie Auflösung und Farbtiefe, enthalten, und die zu übertragenden Daten entsprechend den vorgegebenen Fähigkeiten an die datenabrufende Einrichtung (1; 2; 3) übermittelt werden,
**dadurch gekennzeichnet,**
**daß** eine Liste von verwendbaren Anzeigeformaten an die datenbereitstellende Einrichtung übermittelt wird und diese dann, je nach Verfügbarkeit, das geeignetste Anzeigeformat auswählt.

2. Verfahren nach Anspruch 1, **dadurch gekennzeichnet, daß** die Informationen von der datenabrufenden Einrichtung (1; 2; 3) an die datenbereitstellende Einrichtung (5) übermittelt werden.

3. Verfahren nach Anspruch 1 oder 2, **dadurch gekennzeichnet, daß** die Informationen von einer zwischen der datenabrufenden Einrichtung (1; 2; 3) und der datenbereitstellenden Einrichtung (5) geschalteten Einrichtung an die datenbereitstellende Einrichtung übermittelt werden.

4. Verfahren nach einem der Ansprüche 1 bis 3, **dadurch gekennzeichnet, daß** die abzurufenden Daten in einer zentralen Datenbank (7) der datenbereitstellenden Einrichtung (5) gespeichert sind und bei Abruf durch eine Formatierungseinrichtung in das vorgegebene Datenformat formatiert und an die datenabfragende Einrichtung (1; 2; 3) übermittelt werden.

## Claims

1. Method for automatic adaptation of the data to be transmitted from a data providing device (5) to a data retrieval device (1; 2; 3), to the capacities of the latter device, wherein the data providing device (5) receives information on the capacities of the data retrieval device, and the information contains details of the display format to be processed by the display of the data retrieval device, such as resolution and depth of colour, and the data to be transmitted are communicated to the data retrieval device (1; 2; 3) according to the predetermined capacities, **characterised in that** a list of usable display formats is communicated to the data providing device and the latter then selects the most suitable display format, depending on availability.

2. Method according to claim 1, **characterised in that** the information is communicated from the data retrieval device (1; 2; 3) to the data providing device (5).

3. Method according to claim 1 or 2, **characterised in that** the information is communicated to the data providing device by a device inserted between the data retrieval device (1; 2; 3) and the data providing device (5).

4. Method according to one of claims 1 to 3, **characterised in that** the data to be retrieved are stored in a central data bank (7) of the data providing device (5) and, upon retrieval, formatted by a formatting device to the predetermined data format and communicated to the data retrieval device (1; 2; 3).

## Revendications

1. Procédé pour adapter automatiquement aux capacités d'un dispositif d'appel de données (1; 2; 3) les données à transmettre à celui-ci par un dispositif fournisseur de données (5) , selon lequel le dispositif fournisseur de données (5) reçoit des informations sur lesdites capacités du dispositif d'appel de données, les informations contiennent des indications sur le format d'affichage apte à être traité par l'affichage du dispositif d'appel de données, comme la définition et l'intensité des couleurs, et les données à transmettre sont communiquées au dispositif d'appel de données (1; 2; 3) selon les capacités prédéfinies,
**caractérisé en ce qu'**une liste de formats d'affichage utilisables est communiquée au dispositif fournisseur de données, et celui-ci sélectionne alors, suivant la disponibilité, le format d'affichage le plus approprié.

2. Procédé selon la revendication 1, **caractérisé en ce que** les informations sont communiquées par le dispositif d'appel de données (1; 2; 3) au dispositif fournisseur de données (5) .

3. Procédé selon la revendication 1 ou 2, **caractérisé en ce que** les informations sont communiquées par un dispositif monté entre le dispositif d'appel de données (1; 2; 3) et le dispositif fournisseur de données (5) au dispositif fournisseur de données.

4. Procédé selon l'une des revendications 1 à 3, **caractérisé en ce que** les données à appeler sont mises en mémoire dans une banque de données centrale (7) du dispositif fournisseur de données (5) et, lorsqu'elles sont appelées, sont formatées par un dispositif de formatage pour adopter le format de données prédéfini et enfin sont communiquées au dispositif d'appel de données (1; 2; 3).
